# EUROPEAN PATENT APPLICATION

(11) **EP 4 201 666 A1**
(43) Date of publication of application: **28.06.2023**
(21) Application number: 21218424.6
(22) Date of filing: 31.12.2021
(51) Int. Cl.: B32B 5/02, B32B 27/12, B32B 27/32

(54) **A NON-SLIP COMPOSITE STRUCTURE**

(30) Priority: 23.12.2021 TR 202120782
(71) Applicant: Teknomelt Teknik Mensucat Sanayi Ve Ticaret Anonim Sirketi, 46000 Kahramanmaras (TR)
(72) Inventor: KARABUGA, Semistan, KAHRAMANMARAS (TR); KEBELI , Duhan Soysan, KAHRAMANMARAS (TR)
(74) Representative: Yamankaradeniz, Kemal

(57) **Abstract**

The invention relates to a nonwoven composite structure (A) comprising a laminated fabric layer (B) defined by a nonwoven fabric layer (B1) to which a film layer (B2) is laminated to seal and an anti-slip surface layer (C) that is created by applying an anti-slip chemical (C1) to the entire surface of said film layer (B2) with the kissroll method continuously and without leaving any gaps so as in to provide anti-slip feature to said nonwoven composite structure (A) and to a related production method.

## Description

### Field of the Invention

The present invention relates to a nonwoven fabric-based non-slip composite structure with impermeability and to the production method of this composite structure.

In particular, the present invention relates to providing an anti-slip feature to the film surface in a composite product formed by laminating the nonwoven fabric with the sealing film.

### State of the Art

Nonwoven products, which are usually preferred in composite structures, are widely used in many fields such as medical products, hygienic products, construction materials, filter structures, and sorbent applications, etc. Using nonwoven products frequently in many different sectors is due to the reason that the production methods of these products are practical and fast and they can be produced at low costs.

Nonwoven structures produced with the meltblown method are generally used in filter applications. When fiber thicknesses in meltblown structure are used at the level of 2-6 microns, it provides a good performance. The fiber thickness varies in the range of 20-30 microns in nonwoven structures produced by spunbond method, they are widely used in terms of giving strength to structures and providing a wide variety of functional properties. Likewise, composite structures in which nonwoven products obtained by spunbond and meltblown methods are used exhibit a wide range of functional properties and are suitable for many different sectors.

Nonwoven composite structures can be used as covering elements on working and walking surfaces. As a result of situations such as slipping, tripping, and falling, serious injuries that may result in fractures, joint sprains, low back injuries, crushes, tissue tears, and even death may occur that may require inpatient care due to the low coefficient of friction on working and walking surfaces. The conditions that cause risks that may occur on slippery surfaces must be eliminated. Accordingly, the friction coefficient of the surface is increased by providing anti-slip properties to nonwoven composite structures used on working and walking surfaces, and life safety is ensured against possible dangers.

Likewise, the precautions to be taken against the slipping problem in many areas for occupational safety have an important place in the medical sector. In case the disposable patient bedspreads slip, very risky situations may occur for the patients and personnel. The disposable patient bedspreads are fixed on the stretcher by means of elastic banding however, this does not provide a proper solution and is not applicable especially in emergency situations. The use of non-slip non-woven composite structures instead of products such as rubber stretchers, mattress covers, etc. provides comfort, it also facilitates the bed cleaning procedure against the patient's urine, blood, and similar fluid spills.

Nonwoven composite structures can be used both as floor protection and to reduce the slipping risks of the employee due to spilled paint, screws and similar materials in homes and workplaces where renovation, maintenance and repair works are carried out. Protection is required against risks that cause life safety problems due to insufficient precautions in renovation and construction works and that may cause serious injury and orthopedic damage and even loss of life due to slip risks. Life safety against slippery floors in the shower and in front of the shower in the service sectors as in home renovations is among these risks. Furthermore, using anti-slip products with both absorbent and impermeable properties that can provide floor protection and protection against possible damage in the renovation works provides working comfort for those working in these sectors.

There are different types of nonwoven composite structures that provide anti-slip properties developed for use in different sectors. Applications for some structures encountered in the literature are presented herein.

Application numbered TR2019/10478 relates to anti-slip carpet underlay with pad. Said anti-slip carpet underlay with pad contains surfaces formed by plastic dripping and plastering method on the lower and upper surfaces of the polyester nonwoven fabric so as to provide better adhesion to the floor and carpet and provide complete anti-slip and provides increased comfort and isolation by means of the carpet pad placed in the middle.

Application numbered TR2020/18495 relates to nonwoven based anti-slip floor protection cover. The production of nonwoven-based anti-slip floor coverings of the invention comprises processing the fiber raw material and obtaining the nonwoven structure with the following process steps; fiber blending stage, metal separation stage, mixing stage in mixer, carding stage, cross-laying stage, needling stage, chemical application stage, fixation and winding stage, calendar binding stage. The floor protection cover is given an anti-slip feature with the chemical application stage in the production steps. This process step is performed after the needling step such that anti-slip chemical substances are applied to one surface of the product by spraying, in the form of foam or by printing method, and it is partially adhered to the product. In practice, pure acrylic, acrylic copolymers, polyurethane or PVC emulsions can be used as anti-slip chemicals.

Application numbered JP2007118288 (A) relates to a multi-layer film structure of anti-slip structure. Film structure comprises a core layer, an anti-slip layer provided on one surface of the core layer and a release film layer provided on the other surface. The application of the anti-slip layer and the release film layer to the two surfaces of the core layer is carried out simultaneously with the multi-layer film coating device. The core layer in the film structure can be a paper, a film layer made of nonwoven fabric or resin.

Application numbered JP2013226361 (A) relates to a disposable toilet mat. The structure is a disposable mat with absorbent anti-slip structure developed for use in the bathroom environment and especially around the toilet bowl. The mat structure of the invention consists of; nonwoven fabric layer containing a mixture of a deodorant polymer, a deodorizing polymer and a superabsorbent polymer mixed with an antimicrobial polymer, an anti-slip and waterproof layer with a rigid backing layer provided on the back of the nonwoven fabric and a water absorbent layer provided on the front of the nonwoven fabric.

Even if these applications constitute anti-slip non-woven structures for different fields of use, all of them are not suitable for use in disposable applications. Disposable non-slip composite structures require excessive use of water, chemicals and consumables and cause high production costs.

As a result, due to the abovementioned disadvantages and the insufficiency of the current solutions regarding the subject matter, a development is required to be made in the relevant technical field.

### Brief Description of the Invention

The present invention is related to non-slip nonwoven composite structures which fulfils the abovementioned requirements, eliminates all disadvantages and brings some additional advantages.

The main aim of the invention is to present disposable waterproof (liquid) nonwoven composite structures that form a barrier against slipping and production methods thereof.

One aim of the invention is to provide a non-woven composite structure that can be suspended for a while on vertical surfaces such as walls while providing anti-slip properties on flat surfaces.

Another aim of the invention is to provide disposable nonwoven composite structures with low production costs.

In order to fulfil the above-mentioned aims, the present invention is a nonwoven composite structure incorporating a laminated fabric layer defined by a nonwoven fabric layer to which a film layer is laminated so as to provide sealing. Said nonwoven composite structure contains an anti-slip surface layer formed by applying an anti-slip chemical to the entire surface of said film layer with the kissroll method in a continuous manner such that no space is left so as to provide an anti-slip feature to said nonwoven composite structure.

Said anti-slip chemical should preferably contain at least one of the components of water-based or water-soluble glue so as to achieve the aims of the present invention.

Said anti-slip chemical preferably contains at least one of the following components so as to achieve the aims of the invention; dextrins, starches, ethylene vinyl acetate (EVA), polyvinyl acetate (PVA), acrylic resin emulsion polymers, polyvinyl alcohol, cellulose ethers, methylcellulose, carboxymethylcellulose, water-based acrylic emulsions, water-based acrylic copolymers and polyvinylpyrrolidone.

Said nonwoven fabric layer is a structure with at least one layer consisting of 0-100% usage rate spunbond (SB) and/or 0-100% usage ratio meltblown (MB) structures so as to achieve the aims of the invention.

Said nonwoven fabric layer preferably consists of one or more of the following; 100% polypropylene or 10-90% polypropylene and 10-90% polyethylene, polyethylene terephthalate, polybutylene terephthalate and polylactate polymers so as to achieve the aims of the invention.

Said nonwoven fabric layer is hydrophilic or hydrophobic, with a total weight preferably in the range of 20-500 gr/m2 so as to achieve the aims of the invention.

Said film layer is preferably made of polyethylene with a weight of 12-50 gr/m2 and/or a thickness of 12-50 microns so as to achieve the aims of the invention.

In order to achieve the aims of the invention, the anti-slip chemical transferred to the surface of the film layer so as to form said anti-slip surface layer is preferably 1-20 gr/m2 in weight.

The present invention also relates to a production method of a production system for obtaining a non-slip nonwoven composite structure from a laminated fabric layer defined by a nonwoven fabric layer impermeably laminated with a film layer. Said method comprises the following process steps.
a) Feeding the laminated fabric layer into the production system with a feed roller
b) Conveying the laminated fabric layer through a guiding roller to a kissroll roller,
c) Creating the nonwoven composite structure by uninterrupted application of the anti-slip chemical provided in a chemical tank on the film layer of the laminated fabric layer with a Kissroll roller,
d) Drying the nonwoven composite structure obtained by passing the same over the heater,
e) Conveying and winding the nonwoven composite structure to the winding roller by pulling the same with a transfer roller

The structural and characteristic features of the present invention will be understood clearly by the following drawings and the detailed description made with reference to these drawings and therefore the evaluation shall be made by taking these figures and the detailed description into consideration.

### Figures Clarifying the Invention

**Figure 1** is a schematic view of the inventive nonwoven composite structure.
**Figure 2** is a schematic view of the production system of the inventive nonwoven composite structure.

The figures are not required to be scaled and the details which are not necessary for understanding the present invention may be neglected. Moreover, the elements that are at least substantially identical or have at least substantially identical functions are shown by the same number.

### Description of the References

- 10: Production System
11 Fabric Feeding Roller
12 Guiding Roller
13 Chemical Tank
14 Kissroll Roller
15 Heater
16 Transfer Roller
17 Winding Roller
- A: Nonwoven Composite Structure
- B: Laminated Fabric Layer
B1 Nonwoven Fabric Layer
B2 Film Layer
- C: Anti-Slip Surface Layer
C1 Anti-Slip Chemical

### Detailed Description of the Invention

In this detailed description, the inventive nonwoven composite structure (A) is described only for clarifying the subject matter in a manner such that no limiting effect is created.

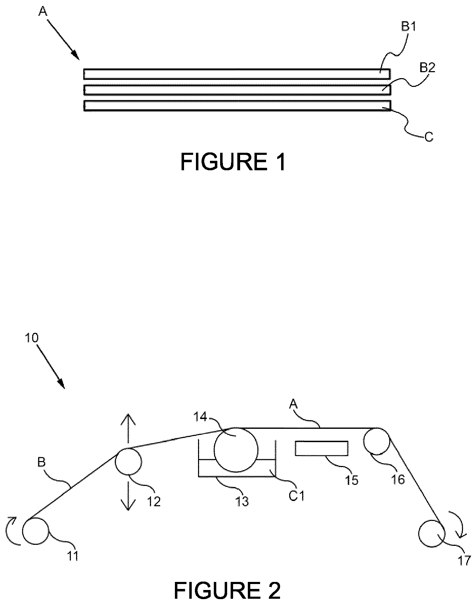

The inventive nonwoven composite structure (A) consists of a nonwoven fabric layer (B1) as seen in Figure 1, a film layer (B2) applied on at least one surface of said nonwoven fabric layer (B1) and an anti-slip surface layer (C) provided on said film layer (B2). The film layer (B2) is applied on the nonwoven fabric layer (B) by the lamination method and the obtained structure forms the laminated fabric layer (B). The film layer (B2) provides impermeability of said laminated fabric layer (B). Anti-slip chemical (C1) is applied on the film layer (B2) on the laminated fabric layer (B) with the kissroll method and said anti-slip surface layer (C) is obtained. Thus, it is ensured that the nonwoven composite structure (A) exhibits both impermeability features and anti-slip feature.

Nonwoven fabric layer (B1) is a structure with at least one layer consisting of 0-100% usage rate spunbond (SB) and/or 0-100% usage ratio meltblown (MB) structures. The layers that make up the nonwoven fabric layer (B1) can be in various arrangements such as only SB, only MB, SB-MB, SB-MB-SB, SB-MB-MB-SB, SB-MB-SB-MB-SB according to the purpose of use. The content of the nonwoven fabric layer (B1) can be 100% polypropylene, or it can be arranged in a way that consists of 10-90% polypropylene and 10-90% polyethylene, polyethylene terephthalate, polybutylene terephthalate and polylactate polymers. The nonwoven fabric layer (B1) is produced to be hydrophilic or hydrophobic and its total weight can preferably be in the range of 20-500 gr/m2.

The film layer (B2) laminated on the nonwoven fabric layer (B1) is preferably polyethylene. The film layer (B2) preferably has a weight of 12-50 gr/m2 and/or a thickness of 12-50 microns, depending on the desired sealing effect.

Anti-slip chemical (C1) applied on the film layer (B2) with the kissroll method comprises one or more of the following compounds; dextrins, starches, ethylene vinyl acetate (EVA), polyvinyl acetate (PVA), acrylic resin emulsion polymers, polyvinyl alcohol, cellulose ethers, methylcellulose, carboxymethylcellulose, water-based acrylic emulsions, water-based acrylic copolymers and components in water-based or water-soluble glue structure containing polyvinylpyrrolidone. The anti-slip chemical (C1) can be in a transparent structure or it can be used by coloring it with various dyestuffs. The anti-slip chemical (C1) transferred to the surface of the film layer (B2) preferably has a weight of 1-20 gr/m2 so as to form the anti-slip surface layer (C).

The production system (10), whose schematic view is given in Figure 2 provides to reveal our inventive nonwoven composite structure (A) with the application of anti-slip chemical (C1) with the kissroll method on the laminated fabric layer (B). Said production system (10) consists of a fabric feeding roller (11), a guiding roller (12), a chemical tank (13), a kissroll roller (14) immersed in said chemical tank (13), a heater (15), a transfer roller (16) and a winding roller (17) respectively.

The laminated fabric layer (B) is fed to the production system (10) by means of said fabric feeding roller (11). The laminated fabric layer (B) is then passed through said guiding roller (12) and transmitted to the kissroll roller (14). The guiding roller (12) is movable up and down and is used to determine the contact angle of the kissroll roller (14) and the laminated fabric layer (B). The contact angle provides the determination of the ratio of the anti-slip chemical (C1) to be transferred to the laminated fabric layer (B) by the kissroll roller (14).

Anti-slip chemical (C1) taken from the chemical tank (13) with the Kissroll roller (14) is applied on the film layer (B2) on the laminated fabric layer (B). This application is carried out by completely covering the film layer (B2) with the anti-slip chemical (C1) such that there are no spaces left. Therefore, a continuous anti-slip surface layer (C) is formed on the laminated fabric layer (B), and the nonwoven composite structure (A) is obtained. Nonwoven composite structure (A) is conveyed to the winding cylinder (17) by being pulled by the transfer cylinder (16) after the kissroll cylinder (14) and is wound. Anti-slip chemical (C1) that creates the anti-slip surface layer (C) ensures that the volatile components in it are removed from the structure by drying efficiency with said heater (15) provided between the Kissroll roller (14) and the transfer roller (16). The drying temperature applied in the heater (15) varies according to the content of the nonwoven fabric layer (B1). The transfer roller (16), which interacts with the heater (15), controls the tension of the nonwoven composite structure (A) and provides feeding to the winding roller (17) during the progress of the nonwoven composite structure (A) under the heater (15).

A laminated fabric layer (B) with a sealed surface is formed by laminating with the polyethylene film layer (B2) of the nonwoven fabric layer (B1) containing hydrophobic and hydrophilic surfaces with the inventive production method. Afterwards, an anti-slip chemical (C1) is transferred onto the film layer (B2) on the laminated fabric layer (B) obtained by the kissroll method. Obtained nonwoven composite structure (A) can provide anti-slip feature on the flat surface and it can further provide low-strength adhesion on the wall surface. Obtained nonwoven composite structure (A) is preferably a disposable product that can be used in medical areas, in applications that require modification and repair, in cases where it must be covered to protect the surface and prevent possible accident risks.

## Claims

1. A nonwoven composite structure (A) of the present invention **comprising of** a laminated fabric layer (B) defined by a nonwoven fabric layer (B1) to which a film layer (B2) is laminated to seal, **characterized in that;** comprises an anti-slip surface layer (C) that is created by applying an anti-slip chemical (C1) to the entire surface of said film layer (B2) with the kissroll method continuously and without leaving any gaps so as in to provide anti-slip feature to said nonwoven composite structure (A).

2. The nonwoven composite structure (A) according to claim 1, **characterized in that;** said anti-slip chemical (C1) should preferably comprise at least one of the components of water-based or water-soluble glue.

3. The nonwoven composite structure (A) according to claim 1 or 2, **characterized in that;** said anti-slip chemical (C1) preferably comprises at least one of the following components; dextrins, starches, ethylene vinyl acetate (EVA), polyvinyl acetate (PVA), acrylic resin emulsion polymers, polyvinyl alcohol, cellulose ethers, methylcellulose, carboxymethylcellulose, water-based acrylic emulsions, water-based acrylic copolymers and polyvinylpyrrolidone.

4. The nonwoven composite structure (A) according to claim 1, **characterized in that;** nonwoven fabric layer (B1) is a structure with at least one layer comprises 0-100% usage rate spunbond (SB) and/or 0-100% usage ratio meltblown (MB) structures.

5. The nonwoven composite structure (A) according to claim 1 or 4, **characterized in that;** said nonwoven fabric layer (B1) preferably comprises one or more of the following; 100% polypropylene or 10-90% polypropylene and 10-90% polyethylene, polyethylene terephthalate, polybutylene terephthalate, and polylactate polymers.

6. The nonwoven composite structure (A) according to claim 1, 4 or 5, **characterized in that;** said nonwoven fabric layer (B1) is hydrophilic or hydrophobic, with a total weight preferably in the range of 20-500 gr/m2.

7. The nonwoven composite structure (A) according to claim 1, **characterized in that;** said film layer (B2) is preferably made of polyethylene with a weight of 12-50 gr/m2 and/or a thickness of 12-50 microns.

8. The nonwoven composite structure (A) according to claim 1, **characterized in that;** the anti-slip chemical (C1) transferred to the surface of the film layer (B2) so as to form said anti-slip surface layer (C) is preferably 1-20 gr/m2 in weight.

9. A production method of a production system (10) for obtaining a non-slip nonwoven composite structure (A) from a laminated fabric layer (B) defined by a nonwoven fabric layer (B1) impermeably laminated with a film layer (B2), **characterized in** comprising the following process steps;
a) Feeding the laminated fabric layer (B) into the production system (10) with a feeding roller (11),
b) Conveying the laminated fabric layer (B) through a guiding roller (12) to a kissroll roller (14),
c) Creating the nonwoven composite structure (A) by uninterrupted application of the anti-slip chemical (C) provided in a chemical tank (13) on the film layer (B2) of the laminated fabric layer (B) with a Kissroll roller (14),
d) Drying the nonwoven composite structure (A) obtained by passing the same over the heater (15),
e) Conveying and winding the nonwoven composite structure (A) to the winding roller (17) by pulling the same with a transfer roller (16).
